(19)

**Europäisches Patentamt**

**European Patent Office**

**Office européen des brevets**

(11) **EP 4 016 008 A1**

(12) **EUROPEAN PATENT APPLICATION**

(43) Date of publication:
**22.06.2022 Bulletin 2022/25**

(21) Application number: **20215158.5**

(22) Date of filing: **17.12.2020**

(51) International Patent Classification (IPC):
**G01D 5/14** *(2006.01)*          **G01D 3/036** *(2006.01)*

(52) Cooperative Patent Classification (CPC):
**G01D 5/145; G01D 3/036**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Renesas Electronics America Inc.**
**Milpitas, California 95035 (US)**

(72) Inventor: **JANISCH, Josef**
**8262 Ilz (AT)**

(74) Representative: **Lippert Stachow Patentanwälte**
**Rechtsanwälte**
**Partnerschaft mbB**
**Krenkelstraße 3**
**01309 Dresden (DE)**

(54) **POSITION SENSOR WITH IMPROVED MAGNETIC STRAY FIELD IMMUNITY**

(57)    The invention relates to a method for determining the absolute position of a mobile element (4), at which a source of a magnetic field (5) is fastened, relative to three magneto-sensitive sensors (1, 2, 3), by which a first differential signal (101) and a second differential signal (102) are determined based on the signals of the three magneto-sensitive sensors. This is attained such that the amplitude ratio (105, 106) of the respective differential signals (101, 102) and the off-set values (103, 104) about the respective zero point of the sensor signals (11, 12, 13) are determined from the minimum and maximum values of the differential signals (101, 102), and from these values, scaled signals (107, 108) are calculated a sum signal (109) and a third differential signal (110), which in turn are scaled (111, 112), with the determination of the minimum and the maximum values occurring by a relative movement of the element (4) and the source of the magnetic field (5) fastened thereat over a full range of motion, and that an absolute position is calculated via the scaled sum signal (113) and the scaled third differential signal (114). The invention further relates to a corresponding device (10).

Fig. 7

EP 4 016 008 A1

## Description

The invention relates to a method for determining the absolute rotary position of a rotary element comprising a source of magnetic field. The rotary element together with the source of the magnetic field rotates relative to a first magneto-sensitive sensor, a second magneto-sensitive sensor and a third magneto-sensitive sensor, such that a first sensor signal is measured by the first magneto-sensitive sensor, a second sensor signal by the second magneto-sensitive sensor and a third sensor signal by the third magneto-sensitive sensor. The first sensor signal, the second sensor signal and the third sensor signal representing a component of the magnetic field show a phase off-set $\varphi$ amounting to $0° < \varphi < 180°$ or $180° < \varphi < 360°$.

Here, in the following magneto-sensitive sensors shall particularly include Hall sensors and magneto-resistive sensors like anisotropic magneto-resistive (AMR) sensors, giant magneto-resistive (GMR) sensors and/or tunneling magneto-resistive (TMR) sensors.

The invention further relates to a device for a contactless detection of the absolute rotary position of a rotary element comprising a source of magnetic field. The device comprises a first magneto-sensitive sensor, a second magneto-sensitive sensor and a third magneto-sensitive sensor, such that a first sensor signal is measured by the first magneto-sensitive sensor, a second sensor signal by the second magneto-sensitive sensor and a third sensor signal by the third magneto-sensitive sensor.

Due to its robustness and long lifespan the contactless determination of the absolute rotary position of a rotary element is required primarily in sensors of the automotive industry, industrial automation, devices of medical technology, and the consumer industry.

The contactless detection of the absolute rotary angle of a rotationally supported magnet and a measuring principle based on Hall sensors is described in various patent publications.

DE 698 16 755 T2 describes a method for determining the signals required for calculating the rotary position by forming the difference from two Hall sensor groups. In this method it is disadvantageous that three or four sensors are required and the device described requires an axial design in which the Hall sensors are located underneath the rotationally supported magnet. A determination of the rotary position by assembling the sensor at the perimeter of the source of the magnetic field is impossible using the method according to DE 698 16 755 T2, because the sensor must be fastened centrally relative to the axis of rotation.

WO 2009/088767A2 describes two embodiments. The first embodiment (Fig. 1-47, claims 1-12) describes a design, which determines the absolute angular position via two or four Hall sensors arranged underneath the source of the magnetic field, measuring the axial magnetic field. The signal processing occurs analog. In this embodiment again an analog method is described to correct the phase off-set, with the phase off-set here must amount to $90° < \varphi < 180°$. A second embodiment, WO2009088767A (Fig. 48-55, claims 13-29) describes a design in which the sensors are fastened at the perimeter of the source of the magnetic field and measure the radial magnetic field. However, here three or four Hall sensors are required.

WO 2000/04339 A1 describes a design in which two Hall sensors are fastened at the perimeter of the source of the magnetic field such that they detect the tangential magnetic field.

Furthermore, the sensors are arranged such that the measured signals show a fixed phase off-set of 90°. Here, it is disadvantageous that the phase off-set can change by imprecisions in positioning when the Hall sensors are assembled. This error is not compensated. Furthermore, this design requires two linear Hall sensors in separate housings.

WO 2008/077861 describes a design in which two Hall sensors are fastened at the perimeter of a two-polar magnetized magnetic field source such that they detect the radial magnetic field. The sensors are arranged such that they show a fixed phase off-set of 90°. Again, it is disadvantageous that the phase off-set can change by imprecisions in positioning when the Hall sensors are assembled. This error is not compensated. Furthermore, this design requires two linear Hall sensors in separate housings.

In order to achieve a phase off-set of 90° the sensors must be positioned precisely at a distance of a quarter rotation of the source of the magnetic field, resulting in relatively large space required.

US 2008/0290859 describes a design in which the absolute position of a linearly moved object or a rotational object can be determined using a multi-polar magnet. For this purpose, a group of several Hall sensors positioned serially is switched such that a sinusoidal and a cosine signal result. Here, phase off-sets of the signals caused by the different polar lengths in reference to the length of the sensor group can be compensated via adjustments of amplification. In this method it is disadvantageous that the absolute position can only be determined within a terminal pair of the multi-polar magnetic field source. A direct absolute determination of position over a full rotation of 360° is not possible with this method.

In US 2010/0194385 the absolute position at the perimeter of a source of the magnetic field is determined by one sensor detecting both the radial as well as the tangential magnetic field. From these signals, naturally in their phase off-set by 90°, then the absolute angular position is calculated. By the measurement of both the radial as well as the tangential magnetic field particular sensor types are required, like lateral Hall sensors with ferromagnetic field concentrator. Due to the sensitivity of the magnetic fields in 2 axes (x and y, respectively radial and tangential field), the sensors are sensitive regarding external magnetic fields interference.

WO 2012/035077 A1 discloses a method and device for determining the absolute position of an element that can be moved relative to two magneto-sensitive sensors. A magnetic field source is attached to the element. According to WO 2012/035077 A1 the amplitude ratios of the respective sensor signals and offset values around the respective zero point of the sensor signals are determined from the minimum and maximum values of the sensor signals and standardized sensor signals are calculated from said values. A sum signal and a difference signal are formed from the standardized sensor signals and are in turn standardized, wherein the minimum and maximum values are determined by a relative movement of the element and of the magnetic field source attached thereon over a full movement path and an absolute position is calculated by means of the standardized sum signal and the standardized difference signal. A disadvantage of the method and device disclosed in Wo 2012/035077 A1 is the sensitivity to external magnetic fields.

The invention is based on the objective to provide a method and device for the determination of the absolute rotary position of a rotary element, which is insensitive to external magnetic fields.

According to the invention the object is solved by a method for determining the absolute rotary position of a rotary element comprising a source of magnetic field, wherein the rotary element together with the source of the magnetic field rotates relative to a first magneto-sensitive sensor, a second magneto-sensitive sensor and a third magneto-sensitive sensor, such that a first sensor signal is measured by the first magneto-sensitive sensor, a second sensor signal by the second magneto-sensitive sensor and a third sensor signal by the third magneto-sensitive sensor,

with the first sensor signal, the second sensor signal and third sensor signal representing a component of the magnetic field and show a phasing $\varphi$ in the range of $0° < \varphi < 180°$ or $180° < \varphi < 360°$,

which is characterized in that

a first differential signal between the third sensor signal and the first sensor signal and a second differential signal between the second sensor signal and the third sensor signal are determined, wherein a minimum value and a maximum value of the first differential signal and of the second differential signal are determined by rotational movement of the rotary element and the source of the magnetic field over a full range of motion with simultaneously determining the first differential signal and the second differential signal, wherein:

- a first amplitude ratio is determined by dividing a predetermined signal deviation by a difference of the maximum value and the minimum value of the first differential signal,
- a second amplitude ratio is determined by dividing a predetermined signal deviation by a difference of the maximum value and the minimum value of the second differential signal,
- a first off-set value about the respective zero-point of the first differential signal is determined from the minimum and maximum values of the first differential signal,
- a second off-set value about the respective zero-point of the second differential signal is determined from the minimum and maximum values of the second differential signal,
- a first scaled sensor signal is calculated by a subtraction of the first off-set value from the first differential signal and scaling with the first amplitude ratio,
- a second scaled sensor signal is calculated by a subtraction of the second off-set value from the second differential signal and scaling with the second amplitude ratio,

and in that

a sum signal is calculated by adding the first scaled sensor signal and the second scaled sensor signal and a third differential signal is calculated by subtracting the second scaled sensor signal from the first scaled sensor signal, wherein a minimum value and a maximum value of the sum signal and of the third differential signal are determined by rotational movement of the rotary element and the source of the magnetic field over a full range of motion with simultaneously determining the sum signal and the third differential signal,

wherein

- a third amplitude ratio is determined by dividing a predetermined signal deviation by a difference of the maximum value and the minimum value of the sum signal,
- a fourth amplitude ratio is determined by dividing a predetermined signal deviation by a difference of the maximum value and the minimum value of the third differential signal,
- a third scaled signal is calculated by scaling the sum signal (109) with the third amplitude ratio,
- a fourth scaled signal is calculated by scaling the third differential signal with the fourth amplitude ratio,

and calculating the absolute rotary position of the rotary element from the third scaled signal and the fourth scaled signal.

Due to the determination of the first differential signal and the second differential signal the influence of external magnetic fields can be significantly reduced, if not eliminated.

Pursuant to a variant of the invention the first magneto-sensitive sensor, the second magneto-sensitive sensor and the third magneto-sensitive sensor measure a radial or axial component of the source of magnetic field attached to the rotary element. Consequently, the invention can be used for an on-axis (end of shaft element) or an off-axis (side of shaft element) application.

In an advantageous variant of the invention the the third magneto-sensitive sensor is arranged between the first magneto-sensitive sensor and the second magneto-sensitive sensor, preferably centered between the first magneto-sensitive sensor and the second magneto-sensitive sensor.

According to a further variant of the invention the absolute rotary position of the rotary element comprising the source of the magnetic field is calculated by forming the arc tangent of the ratio of the third scaled signal and the fourth scaled signal.

Pursuant to a variant of the invention the absolute rotary position of the rotary element comprising the source of the magnetic field is calculated via an algorithm of the transformation of the coordinates, preferably via a CORDIC algorithm.

In another variant of the invention the first sensor signal, the second sensor signal and the third sensor signal are greater than white noise.

The object is further solved by a device for a contactless detection of the absolute rotary position of a rotary element comprising a source of a magnetic field, the device comprising:

a first magneto-sensitive sensor, a second magneto-sensitive sensor and a third magneto-sensitive sensor, such that a first sensor signal is measured by the first magneto-sensitive sensor, a second sensor signal by the second magneto-sensitive sensor and a third sensor signal by the third magneto-sensitive sensor, the first magneto-sensitive sensor, the second magneto-sensitive sensor and the third magneto-sensitive sensor are located in a level, spatially off-set in the direction of motion, and arranged distanced from the source of the magnetic field, with the distance between the first magneto-sensitive sensor, the second magneto-sensitive sensor and the third magneto-sensitive sensor being selected such that the phase off-set resulting for the sensor signals is not equivalent to 180° or 360°, and

a first subtractor for determining a first differential signal between the third sensor signal and the first sensor signal and a second subtractor for determining a second differential signal between the second sensor signal and the third sensor signal.

Pursuant to an inventive variant the first magneto-sensitive sensor, the second magneto-sensitive sensor and the third magneto-sensitive sensor are embodied as Hall sensors and/or magneto-resistive sensors like anisotropic magneto-resistive sensors, giant magneto-resistive sensors and/or tunneling magneto-resistive sensors.

According to an advantageous variant of the invention the first magneto-sensitive sensor, the second magneto-sensitive sensor and the third magneto-sensitive sensor are configured such that they detect the radial component or the axial component of the source of magnetic field attached to the rotary element.

In another variant of the invention the source of the magnetic field comprises a multi-polar magnetized induction disk or ring magnet with a number pp of polar pairs, which allow an absolutely measurable range of the rotary position of 360 degrees divided by the number pp of polar pairs.

Pursuant to an alternative variant of the invention the source of the magnetic field comprises a 2-polar diametrical magnetized induction disk or ring.

According to a variant of the invention the third magneto-sensitive sensor is arranged between the first magneto-sensitive sensor and the second magneto-sensitive sensor, preferably centered between the first magneto-sensitive sensor and the second magneto-sensitive sensor.

In an advantageous variant of the invention the first magneto-sensitive sensor, the second magneto-sensitive sensor and the third magneto-sensitive sensor are integrated jointly on a sensor chip.

Pursuant to an inventive variant the sensor chip comprises an analog/digital converter, which is connected at the input side with the first magneto-sensitive sensor, the second magneto-sensitive sensor and the third magneto-sensitive sensor as well as at the output side with a digital computing unit. Preferably the analog/digital converter is connected at the input side with the output of the first subtractor and second subtractor, which are in turn connected to the first magneto-sensitive, the second magneto-sensitive sensor and the third magneto-sensitive sensor.

According to a further variant of the invention the digital computing unit comprises a storage for recording the off-set and amplification.

In a particularly preferred variant of the invention the device implements the method according to the invention.

In the following, the invention is described based on exemplary embodiments with reference to the drawings. It shows

Figure 1 a first embodiment of a device for the contactless detection of the absolute rotary position of a rotary element,

Figure 2 a second embodiment of a device for the contactless detection of the absolute rotary position of a rotary element,

Figures 3-6 different exemplary embodiments for a suitable sources of a magnetic field,

Figure 7 a block diagram of a third embodiment of the invention,

Figure 8 a block diagram of a fourth embodiment of the invention,

Figure 9 a signal diagram of input signals of three magneto-sensitive sensors,

Figure 10 a signal diagram of a scaled third signal and a scaled fourth signal, and

Figure 11 a signal diagram of an error resulting from an external stray field.

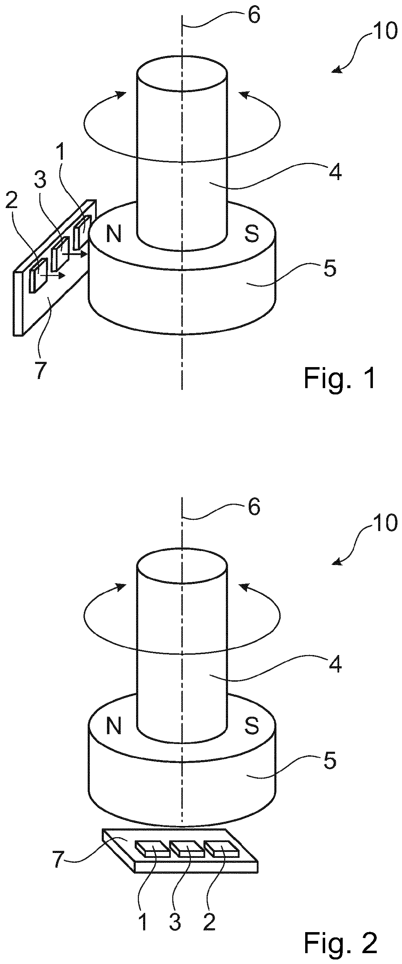

Fig. 1 shows a first embodiment of a device 10 for the contactless detection of the absolute rotary position of a rotary element 4 comprising a source of magnetic field 5. The rotary element 4 together with the source of magnetic field 5 rotates around an axis 6. The rotary element 4 can rotate in both directions as indicated by the corresponding double-arrow.

The device comprises a first magneto-sensitive sensor 1, a second magneto-sensitive sensor 2 and a third magneto-sensitive sensor 3. The first magneto-sensitive sensor 1, the second magneto-sensitive sensor 2 and the third magneto-sensitive sensor 3 are located in a level, spatially off-set in the direction of motion, and arranged distanced from the source of the magnetic field 5. As can be seen from Fig. 1 the third magneto-sensitive sensor 3 is arranged between the first magneto-sensitive sensor 1 and the second magneto-sensitive sensor 2, particularly centered between the first magneto-sensitive sensor 1 and the second magneto-sensitive sensor 2.

The first magneto-sensitive sensor 1 measures a first sensor signal 11, the second magneto-sensitive sensor 2 measures a second sensor signal 12 and the third magneto-sensitive sensor 3 measures a third sensor signal 13.

The distance between the first magneto-sensitive sensor 1, the second magneto-sensitive sensor 2 and the third magneto-sensitive sensor 3 being selected such that the phase off-set resulting for the sensor signals 11, 12 ,13 is not equivalent to 180° or 360°. Preferably, the first sensor signal 11, the second sensor signal 12 and third sensor signal 13 representing a component of the magnetic field and show a phasing $\varphi$ in the range of $0° < \varphi < 180°$ or $180° < \varphi < 360°$.

The first magneto-sensitive sensor 1, the second magneto-sensitive sensor 2 and the third magneto-sensitive sensor 3 are located on a common substrate 7 like a printed-circuit board (PCB). The substrate 7 respectively the PCB builds a sensor chip 100, 200 which comprises further elements for processing the first sensor signal 11, second sensor signal 12 and third sensor signal 13, as will be explained in more detail further below.

In the first embodiment shown in Fig. 1 the first magneto-sensitive sensor 1, the second magneto-sensitive sensor 2 and the third magneto-sensitive sensor 3 are radially offset to the rotary element 4 and the source of magnetic field 5. Thus, the first magneto-sensitive sensor 1, the second magneto-sensitive sensor 2 and the third magneto-sensitive sensor 3 are configured such that they detect the radial component of the source of magnetic field 5 attached to the rotary element 4.

The first magneto-sensitive sensor 1, the second magneto-sensitive sensor 2 and the third magneto-sensitive sensor 3 are embodied as Hall sensors and/or magneto-resistive sensors like anisotropic magneto-resistive (AMR) sensors, giant magneto-resistive (GMR) sensors and/or tunneling magneto-resistive (TMR) sensors.

Using the device shown in Fig. 1 a method for determining the absolute rotary position 202 of the rotary element 4 comprising the source of magnetic field 5 can be implemented. The rotary element 4 rotates together with the source of the magnetic field 5 relative to the first magneto-sensitive sensor 1, the second magneto-sensitive sensor and the third magneto-sensitive sensor 3, such that the first sensor signal 11 is measured by the first magneto-sensitive sensor 1, the second sensor signal 12 by the second magneto-sensitive sensor 2 and the third sensor signal 13 by the third magneto-sensitive sensor 3.

The first sensor signal 11, the second sensor signal 12 and third sensor signal 13 representing a component of the magnetic field and show a phasing $\varphi$ in the range of $0° < \varphi < 180°$ or $180° < \varphi < 360°$.

According to the inventive method a first differential signal 101 between the third sensor signal 13 and the first sensor signal 11 and a second differential signal 102 between the second sensor signal 12 and the third sensor signal 13 are determined, wherein a minimum value and a maximum value of the first differential signal 101 and of the second differential signal 102 are determined by rotational movement of the rotary element 4 and the source of the magnetic field 5 over a full range of motion with simultaneously determining the first differential signal 102 and the second differential signal 102, wherein:

- a first amplitude ratio is determined by dividing a predetermined signal deviation by a difference of the maximum value and the minimum value of the first differential signal 101,
- a second amplitude ratio is determined by dividing a predetermined signal deviation by a difference of the maximum value and the minimum value of the second differential signal 102,
- a first off-set value 103 about the respective zero-point of the first differential signal 101 is determined from the minimum and maximum values of the first differential signal 101,
- a second off-set value 104 about the respective zero-point of the second differential signal 102 is determined from the minimum and maximum values of the second differential signal 102,
- a first scaled sensor signal 107 is calculated by a subtraction of the first off-set value 103 from the first differential signal 101 and scaling with the first amplitude ratio,
- a second scaled sensor signal 108 is calculated by a subtraction of the second off-set value 104 from the second differential signal 102 and scaling with the second amplitude ratio.

Afterwards a sum signal 109 is calculated by adding the first scaled sensor signal 107 and the second scaled sensor signal 108 and a third differential signal 110 is calculated by subtracting the second scaled sensor signal 108 from the first scaled sensor signal 107, wherein a minimum value and a maximum value of the sum signal 109 and of the third differential signal 110 are determined by rotational movement of the rotary element 4 and the source of the magnetic field (5) over a full range of motion with simultaneously determining the sum signal 109 and the third differential signal 110, wherein

- a third amplitude ratio is determined by dividing a predetermined signal deviation by a difference of the maximum value and the minimum value of the sum signal 109,
- a fourth amplitude ratio is determined by dividing a predetermined signal deviation by a difference of the maximum value and the minimum value of the third differential signal 110,
- a third scaled signal 113 is calculated by scaling the sum signal 109 with the third amplitude ratio,
- a fourth scaled signal 114 is calculated by scaling the third differential signal 110 with the fourth amplitude ratio.

Finally, the absolute rotary position 202 of the rotary element 4 is calculated from the third scaled signal 113 and the fourth scaled signal 114.

The first differential signal 101 between the third sensor signal 13 and the first sensor signal 11 is determined by a first subtractor 8 of the device 10, which is preferably arranged on the sensor chip 100, 200. Accordingly, the second differential signal 102 between the second sensor signal 12 and the third sensor signal 13 is determined by a second subtractor 9 of the device 10, which is also preferably arranged on the sensor chip 100, 200.

The absolute rotary position 202 of the rotary element 4 comprising the source of the magnetic field 5 is for example calculated by forming the arc tangent of the ratio of the third scaled signal 113 and the fourth scaled signal 114, particularly via an algorithm of the transformation of the coordinates, preferably via a CORDIC algorithm.

The first sensor signal 11, the second sensor signal 12 and the third sensor signal 13 are preferably greater than white noise.

The second embodiment in shown in Fig. 2 differs from the first embodiment shown in Fig. 1 in that the first magneto-sensitive sensor 1, the second magneto-sensitive sensor 2 and the third magneto-sensitive sensor 3 are axially offset to the rotary element 4 and the source of magnetic field 5. Thus, the first magneto-sensitive sensor 1, the second magneto-sensitive sensor 2 and the third magneto-sensitive sensor 3 are configured such that they detect the axial component of the source of magnetic field 5 attached to the rotary element 4.

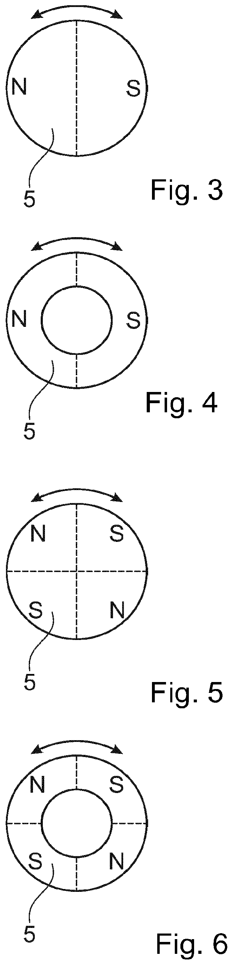

Figs. 3 to 6 show different kinds of sources of magnetic field 5. The source of magnetic field shown in Fig. 3 is a 2-polar diametrical magnetized induction disk and a 2-polar diametrical magnetized induction ring is shown in Fig. 4. The source of magnetic field 5 shown in Fig. 5 is a multi-polar magnetized induction disk with two polar pairs. Fig. 6 shows a source of magnetic field 5 that is a multi-polar magnetized induction ring with two polar pairs. Generally, the number of polar pairs pp is not limited to two and can be higher.

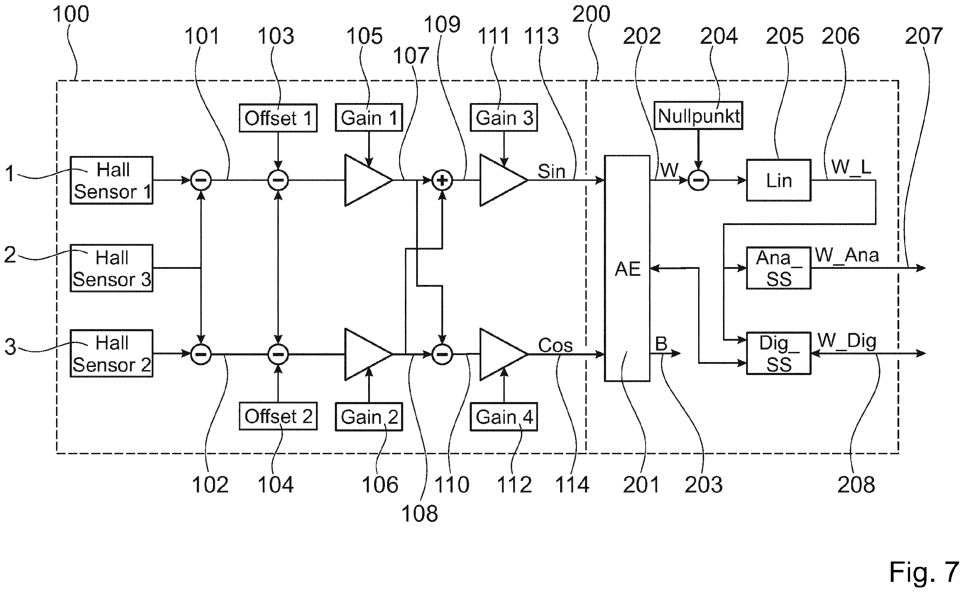

Fig. 7 shows a block diagram of a third embodiment of the invention, particularly of a sensor chip 100 with a first magneto-sensitive sensor 1, a second magneto-sensitive sensor 2 and a third magneto sensitive sensor 3, which measure respectively a first sensor signal 11, a second sensor signal 12 and a third sensor signal 13. The first sensor signal 11, the second sensor signal 12 and third sensor signal 13 representing a component of the magnetic field and show a phasing $\varphi$ in the range of $0° < \varphi < 180°$ or $180° < \varphi < 360°$.

The rotary element 4 comprising a source of magnetic field 5, which rotates relative to the first magneto-sensitive sensor 1, the second magneto-sensitive sensor 2 and a third magneto-sensitive sensor 3 is not shown in Fig. 7. In this respect we refer to the first and second embodiment shown in Figs. 1 and 2.

A first differential signal 101 between the third sensor signal 13 and the first sensor signal 11 is determined. Likewise, a second differential signal 102 between the second sensor signal and the third sensor signal is determined.

```
First differential signal = third sensor signal - first sensor
signal

Second differential signal = second sensor signal - third
sensor signal
```

A minimum value and a maximum value of the first differential signal 101 and of the second differential signal 102 are determined by rotational movement of the rotary element 4 and the source of the magnetic field 5 over a full range of motion with simultaneously determining the first differential signal 102 and the second differential signal 102.

From the minimum values and maximum values of the first differential signal 101 and the second differential signal 102 then the values necessary for trimming can be calculated. A first off-set value 103 about the respective zero-point of the first differential signal 101 is determined from the minimum and maximum values of the first differential signal 101 and a second off-set value 104 about the respective zero-point of the second differential signal 102 is determined from the minimum and maximum values of the second differential signal 102. Furthermore, a first amplitude ratio 105 is determined by dividing a predetermined signal deviation by a difference of the maximum value and the minimum value of the first differential signal 101 and a second amplitude ratio 106 is determined by dividing a predetermined signal deviation by a difference of the maximum value and the minimum value of the second differential signal 102. The scaled signal deviation is for example $2V_{ss}$.

$$Offset1 = \frac{H1_{max} + H1_{min}}{2}$$

$$Offset2 = \frac{H2_{max} + H2_{min}}{2}$$

$$Gain1 = \frac{scaled\ signal\ deviation}{H1_{max} - H1_{min}}$$

$$Gain2 = \frac{scaled\ signal\ deviation}{H2_{max} - H2_{min}}$$

for $H1_{max,min}$ = maximum value and/or minimum value of the first differential signal
$H2_{max,min}$ = maximum value and/or minimum value of the second differential signal

A first scaled sensor signal 107 is calculated by a subtraction of the first off-set value 103 from the first differential signal 101 and scaling with the first amplitude ratio 105 and a second scaled sensor signal 108 is calculated by a subtraction of the second off-set value 104 from the second differential signal 102 and scaling with the second amplitude ratio 106.

```
First scaled sensor signal = (first differential signal -
Offset1) * Gain1

Second scaled sensor signal = (second differential signal -
Offset2) * Gain 2
```

A sum signal 109 is calculated by adding the first scaled sensor signal 107 and the second scaled sensor signal 108 and a third differential signal 110 is calculated by subtracting the second scaled sensor signal 108 from the first scaled sensor signal 107.

```
Sum signal = first scaled sensor signal + second scaled sensor
signal

Third differential signal = first scaled sensor signal -
second scaled sensor signal
```

The ratio of the signal deviation of the sum signal 109 to the third differential signal 110 depends on the phasing φ of the first differential signal 101 and the second differential signal 102. The phasing φ of the sum signal 109 to the third differential signal 110 always amounts to 90°. Exceptions are the special cases of the phasing φ = 360° = 0° as well as φ = 180°, in which a determination of the rotary position is impossible, because at φ = 180° the sum signal 109 becomes 0 and at φ = 360° = 0° the third differential signal 110 becomes 0.

The mathematic connection of the peak value to the sum signal 109 is calculated by the difference signal =

$\dfrac{\hat{S}}{\hat{D}}$ to the phasing from:

$$\frac{\hat{S}}{\hat{D}} = \frac{1}{\tan\left(\dfrac{\varphi}{2}\right)} \qquad \text{for } 0° < \varphi < 180°$$

[1]

$$\frac{\hat{S}}{\hat{D}} = \frac{-1}{\tan\left(\dfrac{\varphi}{2}\right)} \qquad \text{for } 180° < \varphi < 360°$$

[2]

A minimum value and a maximum value of the sum signal 109 and of the third differential signal 110 are determined by rotational movement of the rotary element 4 and the source of the magnetic field 5 over a full range of motion with simultaneously determining the sum signal 109 and the third differential signal 110.

A third amplitude ratio 111 is determined by dividing a predetermined signal deviation by a difference of the maximum value and the minimum value of the sum signal 109 and a fourth amplitude ratio 112 is determined by dividing a predetermined signal deviation by a difference of the maximum value and the minimum value of the third differential signal 110.

$$Gain3 = \frac{scaled\ signal\ deviation}{H3_{max} - H3_{min}}$$

$$Gain4 = \frac{scaled\ signal\ deviation}{H4_{max} - H4_{min}}$$

for $H3_{max,min}$ = maximum value and/or minimum value of the sum signal
$H3_{max,min}$ = maximum value and/or minimum value of the third differential signal

The sum signal 109 and the third differential signal 110 are in turn scaled to a predetermined value, for example $2V_{ss}$.

Assuming that the first scaled sensor signals 107 and the second scaled sensor signal 108 are equivalent to a pure sinusoidal form and show no more off-set voltage; here no additional offset develops either by forming the sum and difference. This can be controlled via the minimum and maximum values from the sum and difference signal and also be corrected, if necessary:

$$Offset_{sum\ signal} = \frac{sum\ signal_{max} + sum\ signal_{min}}{2}$$

$$Offset_{difference\ signal} = \frac{difference\ signal_{max} + difference\ signal_{min}}{2}$$

A third scaled signal 113 is calculated by scaling the sum signal 109 with the third amplitude ratio and a fourth scaled signal 114 is calculated by scaling the third differential signal 110 with the fourth amplitude ratio. If an offset correction is necessary, the Offset_{sum signal} can be subtracted from the sum signal 109 before scaling the sum signal 109 and Offset_{difference signal} can be subtracted from the third difference signal 110 before scaling the third difference signal 110.

The scaled signals of the sum signal 113 and the third differential signal 114 therefore result in two signals phase-shifted by precisely 90° with the same signal deviation. These signals 113, 114 are then directly used for calculating the position of rotation.

In the following, the scaled sum signal 113 is described by Vsin and the scaled difference signal 114 by Vcos.

```
Vsin = Gain3*[Gain1*(H1-Offset1)+Gain2*(H2 - Offset2)]

Vcos = Gain4*[Gain1*(H1-Offset1)-Gain2*(H2 - Offset2)]
```

For H1 = first differential signal
H2 = second differential signal
Offset1 = Offset signal of the first differential signal
Offset2 = Offset signal of the second differential signal
Gain1= amplification of the first differential signal
Gain2= amplification of the second differential signal
Gain3= amplification of the sum signal
Gain4= amplification of the third differential signal

Starting from the input signals Vsin 113 and Vcos 114 the absolute rotary position W 202 of the source of the magnetic field can be determined with the help of arc tangent function $W = \arctan \dfrac{V\sin}{V\cos}$ or other suitable means of the transformation of coordinates, such as a digital CORDIC algorithm.

The amount B 203 of the coordinate transformation is constant for all rotary positions and amounts to:

$$B = \sqrt{V\sin^2 + V\cos^2} = const.$$

In many applications it can be useful to adjust the calculated rotary position with a defined mechanic position of the rotational element 4, for example the zero position of a rotary adjuster. In order to facilitate this, an arbitrary rotary position may be set to zero by subtracting a zero-reference value 204.

Furthermore, the precision of the displayed rotary position yielded can optionally be increased by a linearization circuit 205. Common forms of the linearization are tables or mathematic correcting functions, which attempt to compensate the calculated rotary position to the reference points defined by the user.

Subsequently, the calculated and linearized rotary position 206 can be provided to the user by converting into an analog signal form 207 or a digital signal form 208.

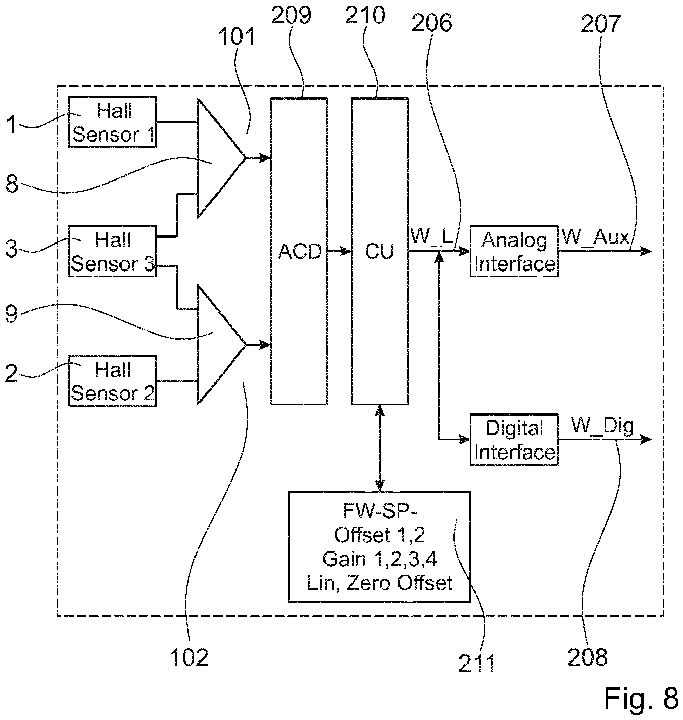

In an advantageous fourth embodiment, as shown in Fig. 8, the signal processing can be performed in a digital fashion. The first difference signal 101 and the second differential signal 102 based on the signals 11, 12, 13 of the first magneto-sensitive sensor 1, of the second magneto-sensitive sensor 2 and of the third magneto-sensitive sensor 3, are converted via an analog-digital converter 209 into a digital signal form and the signal processing steps described with respect to third embodiment shown in Fig. 7 are performed in a digital computing unit 210. The parameters required here for amplification, off-set, zero point, and linearization can be stored in a digital storage unit 211.

If the vertical component of the magnetic field shall be analyzed, here the first, second and third magneto-sensitive sensors 1, 2, 3 are arranged underneath the source of the magnetic field 5 attached to the rotary element 4, as shown for example in the second embodiment of Fig. 2.

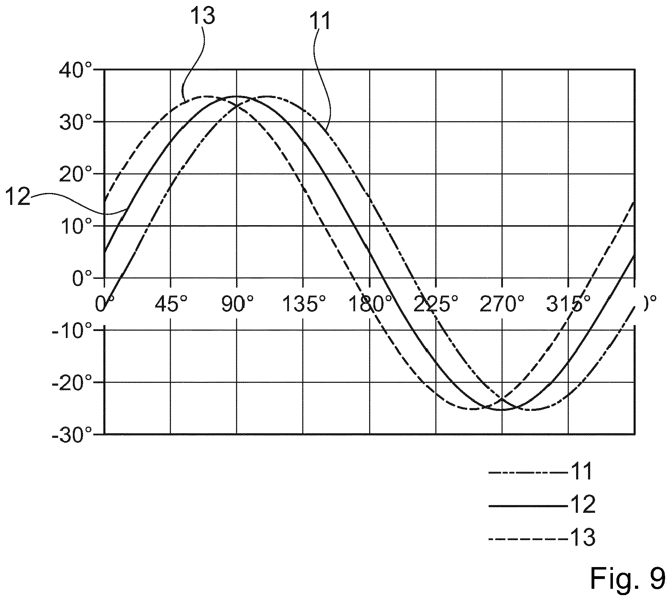

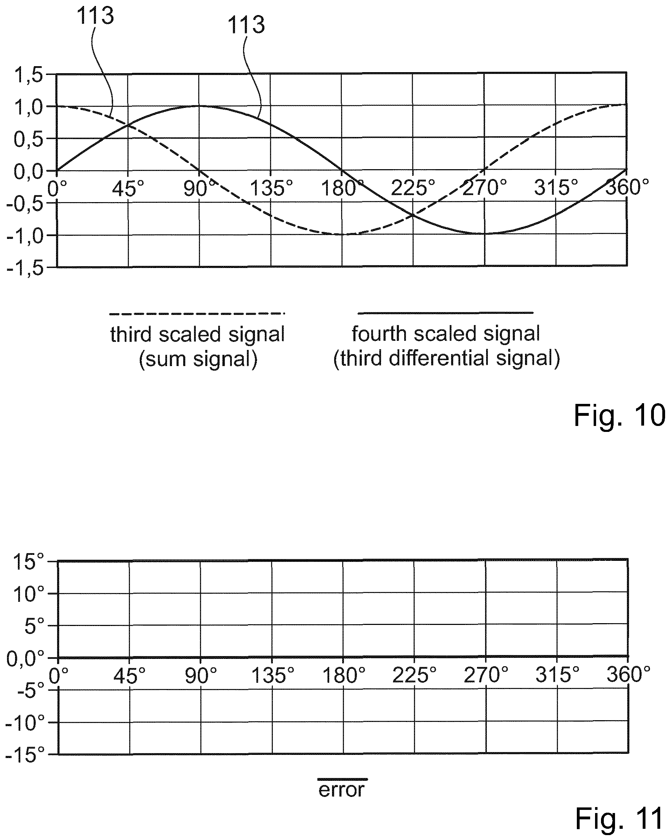

Figure 9 shows an exemplary signal diagram of input signals 11, 12, 13 of respective first magneto-sensitive sensor 1, second magneto-sensitive sensor 2 and third magneto-sensitive sensor 3. Figure 10 shows a signal diagram of a scaled third signal 113 and a scaled fourth signal 114 calculated from the sum signal 109 respectively third differential signal 110. Figure 11 shows a signal diagram of an error resulting from an external stray field using the method or device according to the invention.

Using the present invention, the absolute angular position of a rotary element 4 can be determined, with the three magneto-sensitive sensors 1, 2, 3 being integrated on a common substrate 7, measuring and evaluating the radial or the vertical magnetic field of a source of the magnetic field 5, fastened at the rotary element 4, over its circumference. The signals of the magneto-sensitive sensors 1, 2, 3 may show an arbitrary phasing and signal deviation in a wide range. When using a 2-polar source of the magnetic field a direct, absolute angular position can be measured over a full rotation of 360°. When using a multi-polar source of a magnetic field a direct, absolute angular position can be measured within a terminal pair. Thus, a direct, absolute determination of the position is possible over a full rotation of 360°.

Furthermore, this design allows a wide tolerance range for the adjustment of the magneto-sensitive sensors 1, 2, 3 in reference to the source of the magnetic field 5, because the signal changes of the three magneto-sensitive sensors 1, 2, 3 developing from imprecise assembly can be determined and corrected in reference to phasing, off-set, and signal deviation via a reference run. For this purpose, the source of the magnetic field 5 is moved over the angular range to be measured and here relevant signal points are measured, such as maximum and minimum values. Correction parameters are calculated from these signal points allowing to calculate from the sensor signals 11, 12, 13, showing offset amplitudes, off-sets, and phasing, two differential signals 101, 102 based on the three sensor signals 11, 12, 13 off-set precisely by 90°, with the same signal level and without any off-set. These two differential signals 101, 102 are subsequently converted into a digital signal form and the absolute rotary position of the rotational element 4 is calculated in a digital fashion.

By this way of processing the signals, using the formation of sums and differences, particularly in the area of the poles, a distinct resistance to interferences is achieved in reference to interfering magnetic fields in the regions of the angular position around 90° as well as 270°.

Due to its robustness and long life, the advantage of the invention is its application in the contactless determination of the absolute rotary position of a rotary element 4, primarily in sensors of the automotive industry, industrial automation, devices of medical technology, and consumer industry.

The invention allows to integrate both the sensors 1, 2, 3 as well as the processing circuits on a common substrate 7 and to produce them with standard processing methods of the semiconductor industry, and here on an area as small as possible.

Due to the fact that the real field is detected using two differential signals determined from signals 11, 12, 13 of three magneto-sensitive sensors 3 in the described manner the design is less susceptible to external magnetic fields interfering.

The advantage of the invention further comprises that three magneto-sensitive sensors 1, 2, 3 can be integrated in a housing.

The invention was explained in greater detail using embodiments and figures, which shall not be understood as limitations thereto. It is understood that one skilled in the art can implement changes and modifications without leaving the scope of the following claims. In particular, the invention comprises embodiments with any arbitrary combination of features of the various embodiments described here.

## List of reference characters

| | |
|---|---|
| 1 | first magneto-sensitive sensor |
| 2 | second magneto-sensitive sensor |
| 3 | third magneto-sensitive sensor |
| 4 | rotary element |
| 5 | source of the magnetic field |

| 6 | rotation axis |
| 7 | substrate/PCB |
| 8 | first subtractor |
| 9 | second subtrator |
| 10 | device |
| 11 | first sensor signal |
| 12 | second sensor signal |
| 13 | third sensor signal |
| 100 | sensor chip (analog) |
| 101 | first differential signal |
| 102 | second differantial signal |
| 103 | first off-set |
| 104 | second off-set |
| 105 | first amplitude ratio |
| 106 | second amplitude ratio |
| 107 | first scaled sensor signal |
| 108 | second scaled sensor signal |
| 109 | sum signal |
| 110 | third differential signal |
| 111 | third amplitude ratio |
| 112 | fourth amplitude ratio |
| 113 | third scaled signal (sum signal) |
| 114 | fourth scaled signal (third differential signal) |
| 200 | sensor chip (digital) |
| 201 | Analog-to-Digital converter |
| 202 | absolute rotary position |
| 203 | amount B of the transformation of coordinates |
| 204 | zero reference value |
| 205 | linearization circuit |
| 206 | linearized rotary position |
| 207 | analog signal form |
| 208 | digital signal form |
| 209 | Analog-to-Digital converter |
| 210 | computing unit |
| 211 | digital storage unit |

**Claims**

1. A method for determining the absolute rotary position (202) of a rotary element (4) comprising a source of magnetic field (5),
   wherein the rotary element (4) together with the source of the magnetic field (5) rotates relative to a first magneto-sensitive sensor (1), a second magneto-sensitive sensor (2) and a third magneto-sensitive sensor (3), such that a first sensor signal (11) is measured by the first magneto-sensitive sensor (1), a second sensor signal (12) by the second magneto-sensitive sensor (2) and a third sensor signal (13) by the third magneto-sensitive sensor (3),
   with the first sensor signal (11), the second sensor signal (12) and third sensor signal (13) representing a component of the magnetic field and show a phasing $\varphi$ in the range of $0° < \varphi < 180°$ or $180° < \varphi < 360°$,
   **characterized in that**
   a first differential signal (101) between the third sensor signal (13) and the first sensor signal (11) and a second differential signal (102) between the second sensor signal (12) and the third sensor signal (13) are determined, wherein a minimum value and a maximum value of the first differential signal (101) and of the second differential signal (102) are determined by rotational movement of the rotary element (4) and the source of the magnetic field (5) over a full range of motion with simultaneously determining the first differential signal (102) and the second differential signal (102),
   wherein:

   - a first amplitude ratio (105) is determined by dividing a predetermined signal deviation by a difference of the maximum value and the minimum value of the first differential signal (101),

- a second amplitude ratio (106) is determined by dividing a predetermined signal deviation by a difference of the maximum value and the minimum value of the second differential signal (102),
- a first off-set value (103) about the respective zero-point of the first differential signal (101) is determined from the minimum and maximum values of the first differential signal (101),
- a second off-set value (104) about the respective zero-point of the second differential signal (102) is determined from the minimum and maximum values of the second differential signal (102),
- a first scaled sensor signal (107) is calculated by a subtraction of the first off-set value (103) from the first differential signal (101) and scaling with the first amplitude ratio (105),
- a second scaled sensor signal (108) is calculated by a subtraction of the second off-set value (104) from the second differential signal (102) and scaling with the second amplitude ratio (106),

and **in that**
a sum signal (109) is calculated by adding the first scaled sensor signal (107) and the second scaled sensor signal (108) and a third differential signal (110) is calculated by subtracting the second scaled sensor signal (108) from the first scaled sensor signal (107), wherein a minimum value and a maximum value of the sum signal (109) and of the third differential signal (110) are determined by rotational movement of the rotary element (4) and the source of the magnetic field (5) over a full range of motion with simultaneously determining the sum signal (109) and the third differential signal (110), wherein

- a third amplitude ratio (111) is determined by dividing a predetermined signal deviation by a difference of the maximum value and the minimum value of the sum signal (109),
- a fourth amplitude ratio (112) is determined by dividing a predetermined signal deviation by a difference of the maximum value and the minimum value of the third differential signal (110),
- a third scaled signal (113) is calculated by scaling the sum signal (109) with the third amplitude ratio,
- a fourth scaled signal (114) is calculated by scaling the third differential signal (110) with the fourth amplitude ratio,

and calculating the absolute rotary position (202) of the rotary element (4) from the third scaled signal (113) and the fourth scaled signal (114).

2. A method according to claim 1, **characterized in that** the first magneto-sensitive sensor (1), the second magneto-sensitive sensor (2) and the third magneto-sensitive sensor (3) measure a radial or axial component of the source of magnetic field (5) attached to the rotary element (4).

3. A method according to claim 1 or claim 2, **characterized in that** the third magneto-sensitive sensor (3) is arranged between the first magneto-sensitive sensor (1) and the second magneto-sensitive sensor (2), preferably centered between the first magneto-sensitive sensor (1) and the second magneto-sensitive sensor (2).

4. A method according to one of claims 1 to 3, **characterized in that** the absolute rotary position (202) of the rotary element (4) comprising the source of the magnetic field (5) is calculated by forming the arc tangent of the ratio of the third scaled signal (113) and the fourth scaled signal (114).

5. A method according to one of claims 1 to 4, **characterized in that** the absolute rotary position (202) of the rotary element (4) comprising source of the magnetic field (5) is calculated via an algorithm of the transformation of the coordinates, preferably via a CORDIC algorithm.

6. A method according to one of claims 1 to 5, **characterized in that** the first sensor signal (11), the second sensor signal (12) and the third sensor signal (13) are greater than white noise.

7. A device (10) for the contactless detection of the absolute rotary position (202) of a rotary element (4) comprising a source of a magnetic field (5), the device (10) comprising:

a first magneto-sensitive sensor (1), a second magneto-sensitive sensor (2) and a third magneto-sensitive sensor (3), such that a first sensor signal (11) is measured by the first magneto-sensitive sensor (1), a second sensor signal (12) by the second magneto-sensitive sensor (2) and a third sensor signal (13) by the third magneto-sensitive sensor (3), the first magneto-sensitive sensor (1), the second magneto-sensitive sensor (2) and the third magneto-sensitive sensor (3) are located in a level, spatially off-set in the direction of motion, and arranged distanced from the source of the magnetic field (5), with the distance between the first magneto-sensitive sensor (1), the second magneto-sensitive sensor (2) and the third magneto-sensitive sensor (3) being selected such that the phase off-set resulting for the sensor signals (11, 12 ,13) is not equivalent to 180° or 360°, and

a first subtractor (8) for determining a first differential signal (101) between the third sensor signal (13) and the first sensor signal (11) and a second subtractor (9) for determining a second differential signal (102) between the second sensor signal (12) and the third sensor signal (13).

8. A device (10) according to claim 7, **characterized in that** the first magneto-sensitive sensor (1), the second magneto-sensitive sensor (2) and the third magneto-sensitive sensor (3) are embodied as Hall sensors and/or magneto-resistive sensors like anisotropic magneto-resistive sensors, giant magneto-resistive sensors and/or tunneling magneto-resistive sensors.

9. A device (10) according to claim 7 or 8, **characterized in that** the first magneto-sensitive sensor (1), the second magneto-sensitive sensor (2) and the third magneto-sensitive sensor (3) are configured such that they detect the radial component or the axial component of the source of magnetic field (5) attached to the rotary element (4).

10. A device (10) according to one of claims 7 to 9, **characterized in that** the source of the magnetic field (5) comprises a 2-polar diametrical magnetized induction disk or ring or a multi-polar magnetized induction disk or ring magnet with a number pp of polar pairs, which allow an absolutely measurable range of the rotary position of 360 degrees divided by the number pp of polar pairs.

11. A device (10) according to one of claims 7 to 10, **characterized in that** the third magneto-sensitive sensor (3) is arranged between the first magneto-sensitive sensor (1) and the second magneto-sensitive sensor (2), preferably centered between the first magneto-sensitive sensor (1) and the second magneto-sensitive sensor (2).

12. A device (10) according to one of claims 7 to 11, **characterized in that** the first magneto-sensitive sensor (1), the second magneto-sensitive sensor (2) and the third magneto-sensitive sensor (3) are integrated jointly on a sensor chip (100, 200).

13. A device (10) according to claim 12, **characterized in that** the sensor chip (100, 200) comprises an analog/digital converter (209), which is connected at the input side with the first magneto-sensitive sensor (1), the second magneto-sensitive sensor (2) and the third magneto-sensitive sensor (3) as well as at the output side with a digital computing unit (210).

14. A device (10) according to claim 13, **characterized in that** the digital computing unit (210) comprises a storage (211) for recording the off-set (103,104) and amplification (105, 106, 111, 112).

15. A device (10) according to any of claims 7 to 14, wherein the device (10) implements the method according to any of claims 1 to 6.

Fig. 1

Fig. 2

Fig. 3

Fig. 4

Fig. 5

Fig. 6

Fig. 7

EP 4 016 008 A1

Fig. 8

Fig. 9

113    113

1,5
1,0
0,5
0,0
-0,5    0°    45°    90°    135°    180°    225°    270°    315°    360°
-1,0
-1,5

---------------    ——————————
third scaled signal        fourth scaled signal
(sum signal)              (third differential signal)

Fig. 10

15°
10°
5°
0,0°    0°    45°    90°    135°    180°    225°    270°    315°    360°
-5°
-10°
-15°

——————
error

Fig. 11

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/370924 A1 (BILBAO DE MENDIZABAL JAVIER [CH] ET AL) 26 November 2020 (2020-11-26) | 7-14 | INV. G01D5/14 G01D3/036 |
| Y | * paragraph [0151] * <br> * paragraph [0164] - paragraph [0173] * <br> * paragraph [0244] - paragraph [0251] * <br> * figures 1c,2c,3a-3c,4-6f,9 * | 1-6,15 | |
| X | US 2012/095712 A1 (KOMASAKI YOSUKE [JP] ET AL) 19 April 2012 (2012-04-19) | 7 | |
| A | * paragraph [0061] - paragraph [0069] * <br> * paragraph [0087] - paragraph [0098] * <br> * paragraph [0103] - paragraph [0122] * <br> * paragraph [0162] - paragraph [0186] * <br> * figures 1-5,20-24,29-35 * | 1 | |
| X | US 2009/219016 A1 (DEBRAILLY FRANCK [FR]) 3 September 2009 (2009-09-03) | 7 | |
| A | * paragraph [0052] - paragraph [0063] * <br> * paragraph [0069] * <br> * figures 1,2,3,9 * | 1 | |
| Y,D | WO 2012/035077 A1 (ZENTR MIKROELEKT DRESDEN GMBH [DE]; JANISCH JOSEF [AT]) 22 March 2012 (2012-03-22) * page 5 - page 6 * * page 9, line 7 - line 27 * * page 10, line 18 - page 11, line 18 * * page 14, line 17 - line 21 * * figures 1-4,7 * | 1-6,15 | **TECHNICAL FIELDS SEARCHED (IPC)** <br> G01D |

The present search report has been drawn up for all claims

| Place of search | Date of completion of the search | Examiner |
|---|---|---|
| Munich | 18 May 2021 | Paraf, Edouard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 5158

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2021

| Patent document cited in search report | | | Publication date | Patent family member(s) | | | Publication date |
|---|---|---|---|---|---|---|---|
| US | 2020370924 | A1 | 26-11-2020 | CN | 111981965 | A | 24-11-2020 |
| | | | | EP | 3742130 | A1 | 25-11-2020 |
| | | | | US | 2020370924 | A1 | 26-11-2020 |
| US | 2012095712 | A1 | 19-04-2012 | CN | 102445221 | A | 09-05-2012 |
| | | | | DE | 102011083249 | A1 | 19-04-2012 |
| | | | | JP | 5177197 | B2 | 03-04-2013 |
| | | | | JP | 2012083257 | A | 26-04-2012 |
| | | | | US | 2012095712 | A1 | 19-04-2012 |
| US | 2009219016 | A1 | 03-09-2009 | CN | 101400971 | A | 01-04-2009 |
| | | | | EP | 1969319 | A2 | 17-09-2008 |
| | | | | FR | 2896036 | A1 | 13-07-2007 |
| | | | | JP | 2009522567 | A | 11-06-2009 |
| | | | | US | 2009219016 | A1 | 03-09-2009 |
| | | | | WO | 2007077389 | A2 | 12-07-2007 |
| WO | 2012035077 | A1 | 22-03-2012 | AT | 510377 | A1 | 15-03-2012 |
| | | | | CN | 103403499 | A | 20-11-2013 |
| | | | | EP | 2616778 | A1 | 24-07-2013 |
| | | | | JP | 5613839 | B2 | 29-10-2014 |
| | | | | JP | 2013537310 | A | 30-09-2013 |
| | | | | KR | 20130095759 | A | 28-08-2013 |
| | | | | US | 2013268234 | A1 | 10-10-2013 |
| | | | | US | 2017082459 | A1 | 23-03-2017 |
| | | | | WO | 2012035077 | A1 | 22-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 69816755 T2
- WO 2009088767 A2
- WO 2009088767 A
- WO 200004339 A1
- WO 2008077861 A
- US 20080290859 A
- US 20100194385 A
- WO 2012035077 A1